# EUROPEAN PATENT SPECIFICATION

(11) **EP 1 601 253 B1**
(45) Date of publication and mention of the grant of the patent: **29.04.2009**
(21) Application number: 04718169.8
(22) Date of filing: 05.03.2004
(51) Int. Cl.: A23G 3/28, A23G 3/54, A23G 4/20

(54) **METHOD OF COLORING PANNED CONFECTIONERIES WITH INK-JET PRINTING**
VERFAHREN ZUR FÄRBUNG VON DRAGIERTEN SÜSSWAREN DURCH TINTENSTRAHLDRUCKEN
PROCEDE DE COLORATION PAR IMPRESSION A JET D'ENCRE DE CONFISERIES DURCIES

(30) Priority: 07.03.2003 US 452810 P
(43) Date of publication of application: 07.12.2005
(73) Proprietor: MARS, INCORPORATED, McLean, Virginia 22101-3883 (US)
(72) Inventor: SHASTRY, Arun, Neshanic Station, NJ 08853 (US); BEN-YOSEPH, Eyal, M., Stroudsburg, PA 18360 (US); WILLCOCKS, Neil, A., Fullerton, CA 92835 (US); COLLINS, Thomas, M., Nazareth, PA 18064 (US); PRYBYLOWSKI, David, L., Mendham, NJ 07945 (US)
(74) Representative: James, Anthony Christopher W.P.
(86) International application number: PCT/US2004/007128
(87) International publication number: WO 2004/080191

(56) References cited:
- WO-A-20/04003089
- WO-A2-01/94116
- US-A- 5 495 418
- US-A- 5 800 601
- US-A- 5 878 658
- US-A1- 2003 035 871

## Description

### BACKGROUND OF THE INVENTION

### Field of the Invention

The present invention generally relates to a method of coloring panned confectioneries. In particular, the present invention relates to a method of applying the color coat on panned confectioneries using ink-jet techniques.

### Related Background Art

Panning and film coating are industrial processes for preparing coated edible products, such as confections and pharmaceuticals. Panning and some coating processes are performed in a rotating drum or "pan". Typically, the term "panning" is used with regard to the application of sugar-based coatings, such as, e.g., sucrose or dextrose, to masses of centers to produce coated products.
Typically, multiple applications of a highly concentrated sugar syrup are used to build up the uncolored portion of a sugar shell. This is followed by multiple applications of a concentrated sugar syrup containing colorant. The term "film coating" is used with regard to applying coatings that are not based on sugar to masses of centers, where the coating material typically comprises film forming components, such as a modified cellulose, e.g., hydroxypropyl-methylcellulose that is continuously applied to the centers until the desired coating thickness is achieved.

The panning process comprises the repetitive application of thin layers of a coating solution or composition onto an intermixed mass of centers, while mixing the mass of centers, and the drying of each layer of coating solution or composition during which the sugar in the coating crystallizes between the application of layers. In contrast, as the film coating process does not require the crystallization of a sugar shell, film coating is a continuous process, typically comprising the simultaneous application of a coating solution, distribution by mixing, and drying of the coating solution. That is, the film coating sprayers are not turned off during the film coating process, but, instead, are run continuously until the desired film coating is applied. The film coating solutions typically contain less than about 10 percent solids, as higher concentrations would be too viscous to spray. However, in each process, coating material is built up on the center to form the desired shell or coating.

If the coating is to be colored, an edible colorant is added to the coating solution in the later stages of the coating process. For film coating, a flow of colorant is turned on, and added to the film forming composition flow to the sprayer. For a panned confectionery, following the application of a number of layers of concentrated syrup coating solution to build up the sugar shell, a number of applications of a concentrated sugar solution containing a colorant are applied to provide the color coat. The color coat can require up to 20 applications of a colored coating solution to achieve the desired color. This is because the amount of dye that can be solubilized in the sugar solution is relatively low due to the high sugar solids content of the sugar coating solution. As a result, the process of building the shell, including the coloring steps, can take many hours. Film forming processes are also similarly limited due to the relatively low solubility of the colorant in the film forming component.

Moreover, each pan is typically dedicated to a specific color, as the amount of work required to clean the pan and change colors is extensive, and requires a prohibitive amount of time. As a result, providing colored centers in a blend of colors typically requires a number of coating pans, one for each color. If one of the pans must be taken out of operation for any reason, such as for repairs or maintenance, the entire blending operation must be halted until the pan is running again. The requirement for a separate pan for each color inhibits the flexibility of prior art coloring processes, requiring extra equipment or an extensive amount of work and time to allow for a color change in a blend, during which no product is produced.

Panning and film coating are used to apply coatings to a variety of different types of centers, including, but not limited to, pellets, tablets, pills and molded or granulated products. Examples of coated centers include pharmaceuticals in the form of pills, tablets, and the contents of time-release capsules, chemical products, such as detergents, and foodstuffs, such as candy. Coatings are typically used to prevent degradation and decomposition of the centers from exposure to air and humidity, to give the coated object a decorative appearance, and have been known to prevent the melting of certain chocolate candies in consumer hands.

Panning and film coating apparatus and processes performed by them for coating centers are well known in the art. A typical panning or film coating apparatus comprises a coating pan and mechanisms for introducing a coating solution and a drying gas into the pan. In panning, for example, a mass of centers is introduced into the coating vessel. The mass of centers is then intermixed, a layer of the coating solution is applied to the centers, and the coating layer is dried with the drying gas. The coating may be dispersed by spraying or pouring the coating solution onto the mass of centers. Applying the coating solution while intermixing the mass of centers prevents the coated centers from adhering to each other, and helps insure uniformity. The drying gas, which is often air or dry air, may be introduced simultaneously, with or subsequent to, the application of the coating solution.

Examples of panning apparatus and techniques include the disclosure of U.S. Patent No. 2,652,805 to D'Angelo, which discloses an apparatus for coating tablets, pills, and other small objects. The disclosed coating apparatus comprises a rotating drum, a drive motor, and optionally, one or more blowers. Pills or tablets placed in the drum are tumbled or intermixed by the rotation of the drum. A coating material, added to the drum, is distributed onto the surface of the pills or tablets. Multiple coats of one or more coating materials may be applied with the apparatus.

U.S. Patent No. 3,357,398 to Gross discloses a method and apparatus for coating tablets. The apparatus comprises a tiltable perforated drum or pan mounted on a shaft within a housing, a drive motor, and a mechanism for forcing a drying medium, i.e., air, through an inlet in the housing, through the perforated pan, and out an outlet. Tablets are loaded in the perforated drum, which is then rotated to mix them. An atomized coating material is sprayed onto the tablets and the drying medium is passed through the inlet and the perforated drum, as the tablets are mixed.

U.S. Patent No. 4,245,580 to Okawara discloses a device for coating granular solids. The apparatus comprises a double-cone rotary drum, which is perforated to permit the flow of gas through the drum, a drying gas supply, a drying gas exhaust, annular insulating covers for the drum, and mechanisms for tilting and changing the height of the drum to facilitate loading and unloading. Coating material is sprayed on granular material in the drum, and the drying gas is passed through the drum, as the drum rotates.

U.S. Patent No. 5,495,418 to Latini et al. discloses an automatic panning system that comprises a rotatable drum in which a mass of centers is tumbled and coated with a solution to form a shell, a spray arm for applying a coating solution, an air flow system to provide a drying air flow, and control means. The coating process consists of the repetition of separate spraying, distribution, and drying cycles in which the condition of the air, the drum speed, and the cycle timer are monitored and controlled by the control means.

Prior art methods for printing images on panned confectioneries typically involve contact techniques, i.e., pad or rotogravure printing. As such printing techniques involve contacting the panned product with a printing pad, there is a high likelihood of damage to the product during printing. This is particularly likely with sugar shelled products, when a sufficient amount of time for the panned shell to cool has elapsed, as the outer shell hardens and stiffens with cooling. That is, a sugar shell is somewhat flexible immediately after the panning process is completed, such that, when printed with a contact printer, the shell flexes, and is less prone to cracking than when the shell has had the time to cool. Therefore, shelled panned confectioneries typically cannot be stored prior to printing with prior art contact printing techniques. As a result, custom orders on which a printed image is desired require a freshly panned product, and, thus, the time required for custom orders is undesirably long.

The images that may be obtained on panned confectioneries with such contact printing techniques may also leave much to be desired, as contact printing works best with planar or substantially flat objects, and the surfaces of panned confectioneries are rarely flat. This limits the amount of the surface of the panned product upon which an image can be formed with contact printing techniques. As a result, it is extremely difficult, if not impossible, to color or form an image on the entire surface of a panned product using contact printing Moreover, contact printing techniques do not provide full color images on colored backgrounds or the ability to achieve true color images on dark backgrounds.

In addition, changing a coating part from one color to another is time intensive. Therefore, multiple coating pans are typically required for the production of multiple color coatings, which is costly.

Ink-jet printing involves the production of tiny droplets of ink that are fired by a jet mechanism to a substrate to form an image. A typical ink-jet printer has 4 ink-jets heads or assemblies, typically containing 3 complementary colors and black to allow the production of a broad range of colors. However, color printers having as few as 1 ink color or as many as 12 colors are available. Ink-jet printing on edible products is disclosed in co-pending application nos. 10/211,592, filed August 5, 2002, and published as US 7029112, 09/859,141, filed May 16, 2001, and published as US 7037440, 09/479,549, filed January 7, 2000 (US-A-2003/0035870), and 09/587,108, filed June 2, 2000, and published as WO 01/094116.

A method of ink-jet printing on edibles is described in above-mentioned co-pending U.S. patent application No. 09/587,108. A method for printing multicolor images on the surfaces of shaped edible pieces is described in above-mentioned co-pending U.S. patent application No. 09/479,549. A method for ink-jet printing on surface modified substrates is described in above-mentioned co-pending U.S. patent application No. 10/211,592.

U.S. Patent No. 5,800, 601 discloses food grade ink-jet inks that are free or substantially free of sedimentation. In one example, the disclosed ink was used for ink-jet printing on M&Ms® Brand Chocolate Candies. However, there is no disclosure of applying at least a portion of a color coat to a hard-panned, sugar shelled, pellet-shaped confectionery, having a substantially uncolored sugar surface, by ink-jet printing at least one edible ink onto the uncolored surface of the confectionery.

U.S. Patent No. 4,905,589, 5,433,146, and 5,655,453 to Ackley disclose ink-jet apparatus for marking indicia on pellet shaped articles. The apparatus comprise a feed hopper, a conveyor, having a plurality of receiving pockets, into which pellet shaped articles from the hopper are placed for printing, and an ink jet printer for marking the articles. Printed articles include candies, pharmaceutical capsules, tablets and the like. However, there is no disclosure in any of the Ackley patents of applying at least a portion of a color coat to a hard-panned, sugar shelled, pellet-shaped confectionery, having a substantially uncolored sugar surface, by ink-jet printing at least one edible ink onto the uncolored surface of the confectionery.

Ink-jet printing on edibles, particularly high-resolution, drop-on-demand, ink-jet printing, usually requires the use of low viscosity inks that are readily ejected through tiny orifices in the ink-jet printhead. As will be recognized, for printing on confectionery products, the printing inks used must also be edible. Edible dyes and colorants include natural material, e.g., vegetable colorants, such as from beets, grapes, and carrots, that are assumed to be edible, FDA approved natural colorants, dyes and colorants approved for human consumption under the Food, Drug and Cosmetic Act (FD&C), which is administered by the U.S. Food and Drug Administration (FDA), and colorants approved for human consumption in other countries.

A method of applying the color coat of panned confectioneries with ink-jet printing, thereby significantly improving the flexibility of the process and reducing the time required to color the confectioneries, would be highly desirable. The present invention provides such a method.

### SUMMARY OF THE INVENTION

The present invention overcomes the deficiencies of the prior art, discussed above, by providing a novel method using ink-jet printing techniques that provide the ability to produce custom images on sugar shelled confectioneries, and greatly reduce the amount of equipment required to produce blends of differently colored shelled confectioneries. The present invention is directed to a method of coloring a hard-panned, sugar shelled, pellet-shaped confectionery using ink-jet printing. The claimed method comprises placing at least one hard-panned, sugar shelled, pellet-shaped confectionery, preferably but not necessarily having an uncolored sugar surface, in functional association with an ink-jet head, applying at least a portion of a color coat to the shelled, pellet-shaped confectionery by ink-jet printing at least one edible ink onto the surface of the shelled, pellet-shaped confectionery, and drying the color coat. The method of the invention allows shelled, pellet-shaped centers to be colored immediately after removal from the coating pan, or to be transported and/or stored by any means known in the art before coloring.

Preferably, the method of the invention comprises ink-jet printing edible ink onto a first side of the shelled, pellet-shaped confectionery, flipping the shelled, pellet-shaped confectionery, and ink-jet printing edible ink onto a second side of the shelled, pellet-shaped confectionery. The edible ink applied to the first side of the shelled, pellet-shaped confectionery may be the same or different from the edible ink applied to the second side. The color coat on the shelled, pellet-shaped confectionery may be all of a single color, a mixture of colors, or result in the formation of an image. Where the edible ink forms an image, a portion of the surface of the shelled, pellet-shaped confectionery may be left uncolored to form at least a portion of the image and/or the image may be formed from a plurality of edible inks. Moreover, a base color coat of an edible ink may be ink-jet printed onto at least a portion of the surface of the shelled, pellet-shaped confectionery, and at least one other edible ink may then be applied to the base color coat to form a pattern or image.

### BRIEF DESCRIPTION OF THE DRAWINGS

Fig. 1 is an illustration of a hard-panned, sugar shelled, pellet-shaped confectionery, printed with the method of the invention; and

Fig. 2 is a cross-sectional illustration of a hard-panned, sugar shelled, pellet-shaped confectionery, printed with the method of the invention.

### DETAILED DESCRIPTION OF THE INVENTION

As used herein, the term "pan" refers to a coating vessel, drum, tube, or pan for use in a film coating or panning process. The term "panning" refers to a coating or panning process. The term "panning apparatus" refers to an apparatus for panning or film coating incorporating a pan.

As used herein, the term "uncolored surface" means that no color coating has been applied to the surface. Therefore, as used herein, the terms "uncolored sugar surface" and "uncolored sugar shell" mean that the surface of a sugar shell on a panned confectionery is substantially free of any colorant or dye, and substantially has the appearance of sugar. That is, the sugar shell is substantially white. As will be recognized by those of ordinary skill in the art, for relatively thin sugar shells, some of the color of the underlying confectionery may be visible through the sugar shell. Uncolored sugar surfaces and uncolored sugar shells may contain a pigment, such as titanium dioxide or calcium carbonate, to enhance the whiteness of the sugar shell or carbon black to provide a black or gray surface.

Also, as used herein, the "uncolored surface" of a candy, such as, for example, chocolate or a lollipop, is substantially free of any coating of any additional colorant or dye, and substantially has the appearance and color of the candy. The candy will have the color that results from the candy formulation. For example, the color of an uncolored chocolate surface is brown, and the uncolored surface of a lemon lollipop is yellow.

As used herein, "water-based" means containing more water than non-aqueous solvent, where the amount of non-aqueous solvent present is generally substantially less than that present in conventional food grade inks referred to as "solvent-based."

As used herein, a "solvent-based ink" is one that contains more non-aqueous solvent than water. Solvent-based inks include pigmented and non-pigmented inks, and also include inks in which the solvent is substantially all fat, wax, and/or oil. Solvent-based pigmented inks include a non-aqueous solvent present in a range of about 15 to about 80 percent by weight, and particulates present in an amount between about 5 and about 50 percent by weight.

As used herein, the term "image" refers to any picture or pictorial image, pattern, symbol, or alphanumeric character or group of characters that can be stored in the memory of a computer, and reproduced on a substrate using an ink-jet printhead. Images may be computer generated or scanned into the computer used to control the ink-jet printer. Therefore, images that can be produced with the invention include without limitation alphanumeric character, computer generated patterns and pictures, photographs, drawings, and the like. Images may be multicolored, preferably at least 3 colors, or multi-shaded. Unique images that can be produced with the invention include without limitation plaids, paisleys, and tie-dyed patterns. Using the method of the invention, confectioneries having a non-planar surface having such a unique image covering the entire surface can be made. As used herein, "color coat" means a coating that imparts a color to the surface of the sugar shelled, pellet-shaped confectionery to which it is applied and while the color coat may only be applied to a portion of the surface its application will generally effect the design of the entire surface of the sugar shelled, pellet shaped confectionery. Thus, a color coat is distinguished from a discrete image that is printed on a relatively small area of a confectionery. As noted previously, however, discrete images may be formed by leaving a portion of the surface uncoated. The color coat will cover at least 25%, yet more preferably at least about 50%, and even about 75% and sometimes about 100% of the surface.

As used herein, "ink-jet printing" includes continuous jet printing systems and drop-on-demand systems. Continuous jet printing systems may include a piezoelectric crystal that is used to break up the continuous stream into drops that are then directed to a substrate to form an image. Continuous jet printing systems that use a piezoelectric crystal to break up the continuous stream should not be confused with drop-on-demand piezo-jet systems. Piczo-jct systems use a piezoelectric crystal to deform an ink-containing chamber when a drop of ink is required, reducing the volume of the chamber, and expelling a single drop of ink to the substrate. Only a single drop is produced, when needed, and directed to the substrate. Therefore, inks for such printers do not require any conductivity enhancers, which are required in inks for continuous jet systems to allow the drops to be guided by electric fields. In thermal bubble-jet systems, when required, the ink is sufficiently heated in a chamber to boil a small amount of the ink. The resulting steam forms a bubble that forces a drop of the ink from the chamber and onto the substrate. As with drop-on-demand piezo-jet systems, conductivity enhancers are not required.

As used herein "high resolution" ink-jet printing means greater than about 39 dots per cm (100 dot-per-inch (dpi)). As used herein, "substantial registration" means that the two or more component images of a composite image appear to form a single recognizable image when observed by the human eye.

The present invention is directed to a method of applying at least a portion of the color coat to hard-panned, sugar shelled, pellet-shaped confectioneries with ink-jet printing of an edible ink. The method of the invention reduces the time required to color hard-panned, sugar shelled, pellet-shaped confectioneries from about 3 hours using panning techniques to only a few minutes. Pellet-shaped confectioneries include, for example, oval and lenticular shaped candies, such as M&Ms® Brand Chocolate Candies.

The method of the invention comprises ink-jet printing at least one edible ink-jet ink onto a shelled, pellet-shaped confectionery to form a color coat Preferably, the edible ink-jet ink is ink-jet printed onto a first side of the shelled, pellet-shaped confectionery, at least one edible ink-jet ink is applied to a second side of the shelled, pellet-shaped confectionery using ink-jet printing, and the ink is dried. Preferably, the ink applied to the first side is dried before the ink is applied to the second side. The ink-jet ink applied to the second side may be, but need not be, the same as that applied to the first side. Moreover, each side of the shelled, pellet-shaped confectionery may be completely coated with a single color edible ink-jet ink, or a pattern or image may be formed by applying a combination of inks (different amounts of one ink to provide different shades or different color inks) and/or leaving portions of the surface of the shelled, pellet-shaped confectionery uncolored. Preferably, the method of the invention is employed to provide a substantially complete color coating surrounding the pellet-shaped confectionery. However, some images, such as the "M" on M&Ms® Brand Chocolate Candies, can be formed by leaving a portion of the surface uncolored, or allowing an under layer of color visible through an upper layer.

As discussed above, shelled, pellet-shaped confectioneries are preferably prepared in a panning apparatus in which a sugar-based coating, such as, e.g., sucrose or dextrose, is applied to a mass of centers. In the method of the invention, the centers are preferably chocolate, and the shell is sucrose-based. Thin layers of a sugar-base coating solution are applied to an intermixed mass of centers in a coating pan, while mixing the mass of centers, and drying each layer of the coating solution, as is known in the art. In the method of the invention, once the sugar shells of the coated, pellet-shaped centers are fully developed and dry, they are transported to an ink-jet printing station by any means known in the art, such as by a conveyor belt, cart, container, or the like. The coated, pellet-shaped centers may also be stored for a period of time before printing. Therefore, the printing station and panning apparatus need not be in the same facility.

Ink-jet printing eliminates the need to contact the confectionery substrate with, e.g., a pad or roller, during printing. This is particularly important with hard-shelled confectioneries that crack if printing is not carried out immediately after panning when the shell is still relatively soft. Once the shell has fully hardened, cracking or fracturing of the shell with contact printing is highly likely. As ink-jet printing is a non-contact printing system, this allows storage of the shelled, pellet-shaped centers prior to printing, and provides reduced breakage when the shelled confectioneries are printed following storage. Moreover, slight variations in the size of confectioneries do not have a negative impact upon printing quality as typically occurs with pad or roller-based systems. Non-contact printing also allows printing on curved surfaces, such as those of shelled, pellet-shaped confectioneries.

As the shelled, pellet-shaped confectioneries need not be printed immediately after panning, they may be produced with only an uncolored sugar shell, and stored for coloring at a later time. This is especially advantageous for custom orders and situations where the use of multiple pans for multiple colors is not practical or too expensive. By producing only uncolored shelled, pellet-shaped confectioneries, only a single coating pan is required, as the colorant is applied on a separate line. The uncolored shelled, pellet-shaped confectioneries can be colored using the method of the invention to provide multiple color confectioneries with only a single coating pan, as no color changeover of the pan is required. That is, the color change is effected at the ink-jet head, rather than in the pan. For multiple color ink jet systems, each shelled confectionery can be colored individually with computer control. That is, a blend of different colored shelled, pellet-shaped confectioneries can be produced with the ink-jet system, eliminating the need for additional blending. Moreover, the colors in the blend and/or the ratio of the colors in the blend can be changed at any time with the computer control. The amount of dye and/or colorant required to color the shelled, pellet-shaped confectioneries is also reduced, compared to panning methods of coloring confectioneries.

In addition, the method of the invention allows customers to place orders for custom shelled, pellet-shaped confectioneries that are filled in a minimum amount of time. A store equipped with an ink-jet printer for coloring shelled, pellet-shaped confectioneries can color the confectioneries to order, and have the completed order ready before the customer leaves the store. With the method of the invention, it is also possible to set up customer based/driven customization modules, i.e., "kiosks", in malls and shopping centers. Printing systems in stores and in such kiosks are computer controlled. Kiosks contain a supply of uncolored shelled, pellet-shaped confectioneries and an ink-jet printing apparatus. A customer in a store or at a kiosk is able to select ready made greeting and line print, custom colors, patterns, and/ or images, including designer images and images scanned into the computer, on the computer interface, and obtain the desired colored shelled, pellet-shaped confectioneries on the spot. Payment at the kiosk is by cash or credit card. The method of the invention also provides the ability to produce full color and true color images on colored and/or dark backgrounds.

The production of an ink-jet printer image is computer controlled, and, thus, the image is stored as data on the computer, not on, e.g., a pad or roller, as in contact printing. As a result, the overall speed and throughput of printing a customized image on confectioneries is increased if an ink-jet printer is used, and images can be selected, altered, transmitted, and the like, more easily than in pad printing or offset printing, as the engraving of the custom images into image rolls is not required. This greatly reduces the time and expense required for custom images.

The meth of the invention may comprise forming high resolution images, i.e., greater than about 39 dots per cm (100 dpi) on shelled, pellet-shaped confectioneries. The images may be alphanumeric characters, patterns, faces, or other similar images, depending on the application.

Multicolor images may be formed using a multicolor ink-jet head or a plurality of ink-jet heads, preferably containing inks in at least three primary colors and black. White images or portions of images may be formed with white inks, or by leaving portions of the sugar shell free of ink. The white ink may be substituted for the black, or a fifth ink-jet head for the white ink can be added. A food grade white pigment, such as titanium oxide, TiO2, or calcium carbonate, CaCO3, may be added to the sugar shell to improve the whiteness. Similarly, carbon black may be added to provide a black or gray color, depending on the amount of pigment added. Such images may be formed using one or more inks to color the surface.

Any arrangement of ink-jet heads is within the scope of the invention. A reciprocating ink-jet heat that moves over the candies to produce a color coat or image may be used. Preferably, however, the candies move past one or more ink-jet heads. Where only a single color is required, a single ink-jet of any color may be used, reducing the cost of the apparatus. Moreover, with different color ink-jet heads, two different ink colors can be combined on the surface of a confectionery to form a third color, or premixed inks may be used to provide the desired color. For example, blue and yellow inks may be combined to provide a green color, or a green ink may be pre-mixed and applied. It should be noted that mixing inks of two or three different primary colors can be used to for a wide spectrum of colors and shades.

Preferably, during the ink-jet printing process, the shelled, pellet-shaped confectioneries are positioned under an ink-jet head in a manner that aligns or registers the confectioneries with a printhead. This may be provided by a plate, belt, or drum containing a plurality of conveying pockets, cups, or other depressions shaped to fit individual shelled, pellet-shaped confectioneries. When the position of the plate, belt, or drum is properly registered, at least a portion of the cups or depressions and, thus, any shelled, pellet-shaped confectioneries in the conveying pockets, cups, or other depressions will also be properly positioned under an appropriate printhead. The shelled, pellet-shaped confectioneries may be transported to and positioned under the ink-jet head using a transport and positioning system, such as that disclosed in U.S. Patent Nos. 6,286,421, 6,314,876, 6,450,089, and 6,481,347 all to Ackley.

Shelled, pellet-shaped confectioneries may be printed individually, using an apparatus comprising a single ink-jet printhead, or in groups, using an apparatus comprising multiple printheads. If the position of each shelled, pellet-shaped confectionery is registered, more than one printhead may be used to form an image. That is, the confectioneries may be moved from one printhead to another to form a composite image. The inks may be applied sequentially or mixed to provide the desired colors and images.

As noted above, there are generally two types of ink-jet printing systems, continuous jet and drop-on-demand bubble-jet and piezo-jet systems. In continuous jet systems, ink is emitted in a continuous stream under pressure through at least one nozzle. The stream is broken up into droplets at a fixed distance from the orifice, typically by a piezoelectric crystal, which is vibrated at controlled frequency adjacent to the ink stream. The function of the piezoelectric crystal is different in a continuous jet system than in a piezo-jet drop-on-demand system. In a continuous jet system, the ink stream is generated under pressure in the reservoir, and the crystal serves simply to break up the droplets. To control the flow of ink droplets, the inks are electrostatically charged (by addition of salts and other conductive agents) and the droplets are passed through an electrostatic field, which adjusts the trajectory of the droplets, in accordance with digital data signals. The conductance requirements for continuous jet inks therefore range from 700 to 2000 micro Siemens, which generally requires that the ink contains a conductivity enhancing salt. The droplets are either directed back to a gutter for recirculation or to a specific location on the substrate to create the desired character matrix. A typical resolution for a continuous jet printer image in an industrial setting, using a single printhead and a single pass printing is about 29 to 39 dots per cm (75-100 dots per inch (dpi)).

Of the drop-on-demand systems, the most economically important today are piezo-jet and bubble-jet (sometimes referred to as thermal ink-jet) systems. In bubble-jet systems, a bubble is formed by a resistance heater in an ink reservoir. The resulting pressure wave from the bubble forces ink through the orifice plate, and as the heat is removed, the bubble begins to collapse and a droplet is ejected. Bubble-jet printheads dominate the home and office ink-jet printer markets and they are capable of very high resolution. However, several considerations limit their use for printing on edibles in an industrial setting.

This viscosity of bubble-jet inks is very low, on the order of 1.5 MPa.s, necessary so that a bubble can form quickly upon application of minimal voltage to the resistance heater. The known bubble-jet pointers cannot readily handle the presence of binders or polymeric additives. Moreover, the ink must be capable of withstanding the temperature cycling encountered inside the printhead. For these reasons, the number of inks which could be developed for printing on edibles with a bubble-jet printer is extremely limited. The thermal jet printheads are also associated with ink drying on the surface of the jet channels. It would be preferable if piezo-jet systems could be developed for printing on edibles, as piezo-jet printheads do not require large temperature oscillations. Bubble-jet printers are also much too slow to permit high speed printing directly on edible substrates. Thermal jet printheads (or bubble jet printheads, as they are also known) are used for transfer sheet applications, because the transfer sheets are porous and hydrophilic enough to be used with the known inks. Water-based edible inks known to be thermal jet compatible are disclosed in above-mentioned co-pending U.S. Application No. 10/211,592. However, it has been demonstrated that these inks are incompatible with hydrophobic surfaces, such as wax coatings on shelled candies.

A method of ink-jet printing on edibles is described in above-mentioned co-pending U.S. patent application No. 09/587,108. The ink described therein is a pigmented white ink which has found utility for printing on chocolate.

Pigmented ink compositions, including non-white colored pigmented inks, have been disclosed in the prior art, including U.S. Patent No. 5,800,601. However, pigmented inks are less preferred for drop-on-demand ink-jet systems, because the pigments can influence the rheology of the ink causing poor jettability. Also, the presence of pigment particles may require additional maintenance of the printhead. Once printed, the pigment particles tend to sit on the substrate surface, flaking off easily, or requiring the use of additional binders and/or resulting in poor image adhesion.

Piezo-jet printheads are characterized by a piezoelectric device which causes ejection of ink from a reservoir, such as by a piezoelectric crystal deforming the wall of the reservoir in accordance with data signals. Heretofore, edible inks have not been developed for these systems. Piezojet printheads have larger channels than bubble-jet printheads which affords a greater range of acceptable ink ingredients.

On-demand systems typically produce higher resolution images, and some commercially available printhead units, such as those manufactured by Xaar, Trident, Picojet and Spectra, achieve high throughput rates even with drop-on-demand systems. Also, as drop-on-demand systems do not require ink recovery, charging, or deflection, such systems are simpler than continuous jet systems.

Preferably, a high resolution image printed on a confectionery with a drop-on-demand ink-jet system has a resolution greater than about 78 dots per cm (200 dpi), and, more preferably, greater than about 118 dots per cm (300 dip). Most preferably, the image has photographic or near-photographic resolution, which is on the order of 148 dots per cm (360 dpi). One skilled in the art will recognize that either process printing or line printing may be applied in the method of this invention. process printing would require, of course, multiple ink-jet heads, since the desired color is achieved by providing dots of different colors in close proximity that give the visual appearance of the desired color. On the other hand, only a single print head is necessary to color a hard-panned, sugar shelled, pellet-shaped confectionery in that color, since the desired color is premixed,and fed directly to the print head.

Both continuous jet and drop-on-demand systems can be adapted to multiple-pass printing, where the printhead addresses the same region of the surface of the confectionery in several passes to create a single image. For this to be accomplished, substantial registration is required. That is, in order to print composite images it is necessary to hold the pieces in registration so that they do not move between application of component images. Methods of accomplishing this are disclosed in above-mentioned U.S. patent application No. 09/479,549 and in the Ackley patents.

In preferred embodiments, a multicolor ink-jet printhead is used, such as a standard Cyan/Yellow/Magenta/Black printhead. High resolution multicolor composite images can also be printed in substantial registration by printing a first component image of one or more colors on the surface of the confectionery, and then printing one or more additional component images over the first component image.

Ink formulations that can be used with the invention must be compatible with ink-jet printheads. The terms "ink-jettable" or "ink-jet compatible" are used interchangeably, and include water-based and solvent-based inks that can be ejected through a continuous jet or drop-on-demand ink-jet printhead. Solvent-based inks include fat-, wax-, and oil-based inks.

The preferred ink colorant for use with the invention is an FD&C dye. The FD&C dyes include Red No. 3 (Erythrosine), Red No. 40 (Allura Red), Yellow No. 6 (Sunset Yel. FCF), Yellow No. 5 (Tartrazine), Green No. 3 (Fast Green FCF), Blue No. 1 (Brilliant Blue FCF), Blue No. 2 (Indigotine). Mixtures of these dyes may also be used.

Natural colorants, such as annatto seed extract, anthocyanins, which are found in various berries, grapes, cabbage, and cranberries, carotenoids, which are found in carrots, and oleoresins from roots, such as tumeric, paprika, carmines, beet roots, and tomatoes, are also useful in the invention. As some natural colorants are fat soluble, and some are water soluble, the natural colorants find utility in both water and fat-based inks.

It is also possible to use pigments and lakes. Pigments comprise fine, usually inorganic particles used to impart color when dispersed in a base. Examples of pigments include, without limitation, kaolin, chalk, titanium dioxide, and aluminum hydroxide. A lake comprises fine particles, such as aluminum hydroxide particles bound to a colorant, such as one of the FD&C or natural colorants mentioned above. Examples include, without limitation, FD&C Blue #1 Lake, FD&C Blue #2 Lake, FD&C Yellow #5 Lake, FD&C Yellow #6 Lake, Erythrosine Lake, Amaranth Lake, Ponceau 4R Lake, Carmoisine Lake and FD&C Red 40 Lake, all of which may be obtained from the Warner Jenkinson Company, St. Louis, Missouri.

Preferred water-based non-pigmented inks include water in an amount between about 30 and about 95 percent by weight, preferably between about 30 and about 85 percent by weight, and a soluble colorant in an amount between about 100 ppm and about 5 percent by weight, preferably between about 100 ppm and about 2 percent by weight. Water-based, non-pigmented inks suitable for use in connection with the present invention are available under product numbers CI 15050-D, CI 10572-D, and CI 12022-D, available from Colorcon, Inc., West Point, Pennsylvania. Another series of ink-jet printing inks is commercially available from PhotoFrost Decorating Systems, Blytheville, Arizona.

It is also highly desirable to be able to print on the surface of confectioneries using pigmented inks that provide at least some color opacity. Preferred water-based pigmented inks include water, which is preferably deionized, in an amount of about 30 to about 85 percent by weight, preferably about 30 to about 75 percent by weight, and pigment particulates in an amount of about 3 to about 45 percent by weight, preferably from about 3 to about 35 percent by weight. The dispersion of the pigments in such inks generally must be maintained, as known in the art. Usually, a dispersant, such as glycerine or other polyol, e.g., polyethylene glycol, is used in an amount between I percent by weight and 50 percent by weight. Water-based pigmented inks may also contain one or more non-aqueous solvents in an amount less than that of the water in the ink. Preferably, the non-aqueous solvents are present in an amount of less than about 40 percent by weight. Preferred water-based pigmented inks may optionally contain one or more dyes in an amount of 100 ppm to about 2 percent by weight.

An exemplary water-based white pigmented ink suitable for use in connection with the present invention comprises from about 10 to about 45 percent by weight titanium dioxide, from about 1 to about 48 percent by weight dispersant, preferably glycerin, up to about 40 percent by weight lower molecular weight alcohol, preferably ethanol, from about 30 to about 75 percent by weight water, and less than about 1 weight percent surfactant. Other water-based pigmented inks, such as those described in above-mentioned U.S. patent application No. 09/587,108, may be used as well.

Edible solvent-based inks useful with the invention include pigmented and non-pigmented solvent-based inks, which, as noted above, may be fat-, wax-, or oil-based inks. Solvent-based pigmented inks include a non-aqueous solvent present in an amount of from about 15 to about 80 percent by weight and pigment particulates present in an amount between from about 5 and about 50 percent by weight.

Fat- and oil-based colorants useful in the invention contain a food grade colorant, a dispersant to carry and/or dissolve the food colorant, and a fat or oil base, where an oil is defined as a fat that is liquid at room temperature. "Fat" as used herein includes both fats and oils, either of which may be saturated or unsaturated, and may include substituted and unsubstituted hydrocarbon chains. Fat also includes "fat-like" substances such as limonenes and terpenes, and also includes lipids. Suitable fats that can be used to make the colorants of the invention are hydrogenated vegetable fats, milk fat, cocoa butter, edible fractions of mono-, di- and triglycerides and their derivatives, fats commercially available under the brand name Captex® 300 brand triglyceride, and vegetable oils..

In preferred embodiments, the food grade colorant is an FD&C dye dissolved in a fat-dispersible carrier. The dye and carrier together form a dispersed phase that is distributed in a fat-based continuous phase. In other embodiments, the colorant is a pigment or lake having a fine particle size. In this case, the carrier need only disperse the colorant and mix well in the fat phase. The carrier does not need to dissolve the colorant. Finely divided pigments may also be added to improve the opacity of the colorant.

Where an FD&C dye is used with a fat-based colorant, it is necessary to dissolve the food colorant in a carrier, which is then dispersed into the fat phase. Preferably, colorant is added to the carrier in an amount close to the solubility limit of the carrier for the solvent. The preferred carrier system for FD&C dyes is based on one or more polyols, such as propylene glycol or glycerol. It is also contemplated that the colorants can also be dispersed into water or other polar solvents prior to dispersing into the fat phase. The important characteristics of the carrier system are that it can dissolve the colorant, and is dispersible within the fat phase. Preferably, the FD&C colorant is soluble in the carrier in an amount at least about 1 gram per 100 ml, more preferably, in an amount greater than about 5 grams per 100 ml, and, most preferably, in an amount greater than about 18 grams per 100 ml, where the upper limit to the ink concentration is the solubility limit of the ink in the carrier. Polyols have a good balance of fat-compatibility and solubility for most colorants.

To prepare the fat-based colorant solution, the colorant is simply added to the carrier and mixed. However, it may be necessary to filter the carrier/colorant mixture. If a colorant is added near the solubility limit of the carrier, a 2.7 micron filter may be used to remove larger particles. In the case of a pigment-based system, a 10 micron filter may be used to remove the largest particle size pigments.

Similarly, wax-based colorant solutions may be used with the invention. "Wax" generally refers to edible waxes such as carnauba wax, bees wax, and candelilla wax, which are solid at room temperature. A combination of waxes may also be used. Wax-based colorants useful in the invention contain a food grade colorant and a wax base, and require a dispersant to carry and/or dissolve the food colorant in the wax base. In preferred embodiments, the food grade colorant is an FD&C dye dissolved in a wax-dispersible carrier. The dye and carrier together form a dispersed phase that is distributed in a wax-based continuous phase. In other embodiments, the colorant may comprise a pigment or lake having a fine particle size. In this case, the carrier need only disperse the colorant and mix well in the wax phase. The carrier does not need to dissolve the colorant. Finely divided pigments may also be added to improve the opacity of the colorant.

The preferred wax-based material undergoes a phase change from a liquid state to a solid state upon contacting the substrate surface. By undergoing a phase change, the wax provides certain properties to the inks such as opacity, good adhesion to the substrate, and good surface chemistry for printing onto hydrophobic substrate surfaces, and the ability to print onto non-porous surfaces.

The surfactants that may be used in the ink of this invention include, for example, anionic surfactants, cationic surfactants and amphoteric surfactants. Of course, the surfactant used must also be edible in the amounts used. Polyglycerol oleates, monostearates, polysorbates, mono- and diglycerides, and phospholipids, including without limitation lecithin, may be used for this purpose. Generally, a surfactant will be present in amounts less than about 1.0 weight percent. Most preferably, the surfactant will be present in an amount between about 0.001 and about 0.5 weight percent, based on final ink-formulation.

All of the above-described inks may also include conventional additives such as flavorings, preservatives, antifoam agents, micronutrients, dispersion stabilizers, anti-bloom agents, anti-oxidants, film formers and binders, proteinaceous materials, and the like, as practiced in the art,

The water-based or solvent-based ink used in connection with the invention must be compatible with the ink-jet head used for printing. Preferably, ink-jet compatible inks have a viscosity of about 1 to about 45 MPa.s, a surface tension of less than about 0.05 N/m (50 dynes/cm), and a particle size compatible with the ink-jet printhead channel. Therefore, the particle size is preferably less than about 50 microns, more preferably less than about 40 microns, and most preferably less than about 30 microns. For very high resolution images, the pigments preferably have an average particle size less than about 5 microns, and, for photographic quality images, less than about 1 micron. Such small particle sizes may be obtained by ball milling lakes or pigments to the desired size.

The surface chemistry of the ink and the surface of the confectionery piece to be printed each play a role in determining the final image quality and resolution. The temperature of the substrate and/or that of the ink can be modified using a stream of dry gas to assist the rapid drying of ink droplets on the surface of the confectionery piece. Temperature modulation will affect the surface energy properties of the ink and confectionery surface, with lower temperatures lowering surface energy and reducing the tendency of an ink to spread across the surface of the confectionery. Applying a low humidity drying gas, such as dry air, will enhance the drying rate of the ink droplets. Temperature modulation of the ink cartridge can also be used advantageously to modify or control ink rheology to maximize printing performance.

The ink image may be optionally dried simply by exposing the printed piece to air without contacting the image for a period of time that is preferably between 30 seconds and five minutes. Advantageously, convection drying with heated air evaporates solvents from the ink in less than thirty seconds, and preferably in less than 10 seconds. After printing and drying, or simply after printing, a further coating of water-based glaze or polishing gum or shellac may be applied to set the image. This has been found to fix the image, and reduce the likelihood of image distortion. A non-contact manner of applying the glaze, gum or shellac is used, such as spraying or air-brushing, so as not to smear the image.

If multiple component images are to be applied to form a composite image, the further coating of water-based glaze or polishing gum enhances the compatibility of the printing surface for the application of one or more additional ink-jetted images.

After printing, in preferred embodiments, a wax coating is applied to the colored confections. The confections may be returned to the pan for application of a hydrophobic finish. Preferably, the hydrophobic finish is applied in two coats, a wet wax coat comprising triglycerides and carnauba wax and a dry wax coat, consisting essentially of carnauba wax. Such an application of a wax finish is well known in the art. However, it has been surprisingly discovered that a wax coating can also be applied with an ink-jet head, where the ink-jet is preferably an drop-on-demand piezo-jet. Wax coatings that can be applied with an ink-jet head include without limitation carnuba. The wax coating may be applied over the entire surface of the colored confectionery or only over an image.

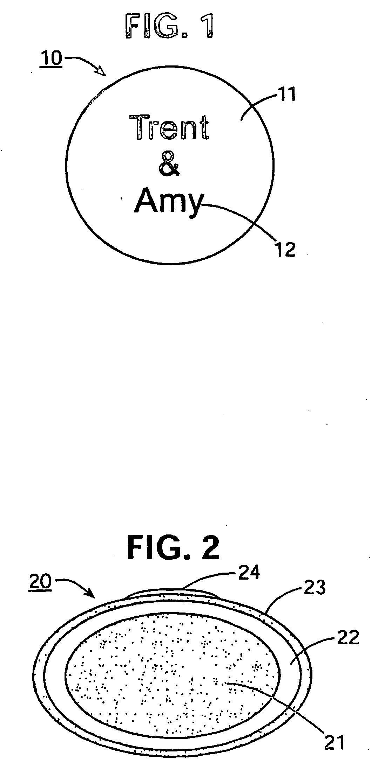

A sugar shelled, pellet-shaped confectionery 10 colored with the method of the invention is illustrated in Fig. 1. The colored sugar shelled, pellet-shaped confectionery has a sugar shell 11 that may be colored and an image 12 ink-jet printed on the sugar shell 11. As discussed above, the sugar shell 11 may be colored to form a base color by ink-jet printing before the image 12 is formed on the shell. Such a sugar shelled, pellet-shaped confectionery 20 is illustrated in cross-section in Fig. 2. The colored sugar shelled, pellet-shaped confectionery 20 illustrated in Fig. 2 comprises a confectionery center 21, a hard-panned sugar shell 22, a color coat 23 formed by ink-jet printing, and an ink-jet image 24.

An image can be printed on a hard-panned, sugar shelled, pellet-shaped confectionery with the method of the invention as follows. A conventional ink-jet printing apparatus is modified to operate using an edible ink, and to print on a hard-panned, sugar shelled, pellet-shaped confectionery. The ink-jet printing apparatus is preferably a drop-on-demand printer, and, more preferably, is a drop-on-demand piezo-jet ink-jet printing apparatus. The preferred drop-on-demand ink-jet printing apparatus comprises at least one reservoir cartridge for holding edible ink. Each reservoir cartridge is integrated with a print head that is configured to print on hard-panned, sugar shelled, pellet-shaped confectioneries. The apparatus comprises at least one driver that drives one or more of the ink-jet prints head according to instructions corresponding to processed digital image information received from a computerized controller. The apparatus preferably comprises a conveyer for passing hard-panned, sugar shelled, pellet-shaped confectioneries under the print head or heads during the printing operation. However, the hard-panned, sugar shelled, pellet-shaped confectioneries may be held stationery as the print head or heads pass over the confectioneries to print the image.

The digital information of the image to be printed is processed by the computerized controller, and converted to a format that is compatible with the ink-jet print head driver. This digital image information in the compatible format is then communicated to the printer to enable the printer to produce the high resolution printed image on the hard-panned, sugar shelled, pellet-shaped confectioneries. In one preferred embodiment of this invention, the digital image completely covers the surface of the hard-panned, sugar shelled, pellet-shaped confectionery with a single color. The digital image information for the printed images may be processed to provide a printed image having an appropriate intensity and contrast relative to the uncolored background shade, i.e, white, gray, or black, of each hard-panned, sugar shelled, pellet-shaped confectionery. Where a complete color coat of the hard-panned, sugar shelled, pellet-shaped confectionery be applied by ink-jet printing before printing the image, the digital image information for the printed images may also be processed to provide a printed image having an appropriate intensity and contrast relative to a background color provided by ink-jet printing. Preferably, the image processing provides control of the intensity of the brightest area of an image, the electronic separation of an image, such that it can be printed in multiple applications of ink, i.e., multiple passes through printer, brightness equalization across the printed area, and sectional control of image brightness and contrast.

In a preferred embodiment, the image is a digital photograph or the like, and the digital image information is processed to enhance image brightness and contrast prior to printing. This can be accomplished, for example, using an image processor such as Adobe® Photoshop®. An edible ink of the appropriate composition and color is provided in each reservoir cartridge of the ink-jet printer. For a single color image, only a single print head and reservoir cartridge is required. For full color images, the ink-jet printing apparatus typically has four print heads and reservoir cartridges, one for each of three primary colors and one for black. If a white ink is required for the image, the black ink cartridge is replaced by a white ink reservoir cartridge, or a fifth cartridge containing white ink and the corresponding print head are added. The particular arrangement of the reservoirs is not particularly critical. Preferably, for pigmented inks, the reservoir is ultrasonically mixed prior to printing to disperse the pigments in the ink to prevent the nozzle from becoming clogged. Preferably, the ink reservoir cartridge is ultrasonically mixed intermittently during the printing operation.

During printing, the hard-panned, sugar shelled, pellet-shaped confectioneries are held and conveyed past the print head or heads, or the print head or heads are moved relative to the confectioneries. The digital image information provided by the computer to the print head driver is used control the ink-jet head or heads to apply ink to the hard-panned, sugar shelled, pellet-shaped confectioneries to form the desired image. Where printing is desired on both sides of the hard-panned, sugar shelled, pellet-shaped confectioneries, the confectioneries are printed on a first side, and preferably dried. The hard-panned, sugar shelled, pellet-shaped confectioneries are then conveyed to past a print head or heads, which may be the same or different as those used to print the first side, and a second side is printed. The printed hard-panned, sugar shelled, pellet-shaped confectioneries are then dried.

Accordingly, it will be appreciated that the present invention has been described with references to particular preferred embodiments that are now contemplated. However, the invention is not limited by the embodiments disclosed herein and it will be appreciated that numerous modifications and other embodiments may be devised by those skilled in the art. Therefore, it is intended that the appended claims cover all such modifications and embodiments that fall within the scope of the present invention.

## Claims

1. A method of applying a color coat (23) by ink-jet printing to a hard-panned, sugar shelled, pellet-shaped confectionery (20), comprising:
placing at least one hard-panned sugar shelled, pellet-shaped confectionery (20) in functional association with an ink-jet head;
applying at least a portion of a color coat (23) to the hard-panned, sugar shelled, pellet-shaped confectionery (20) by ink-jet printing at least one edible ink onto a surface of the hard-panned, sugar shelled, pellet shaped confectionery (20); and
drying the color coat (23), wherein the color coat (23) will cover at least 25% of the surface.

2. The method according to claim 1, wherein the step of applying comprises:
ink-jet printing edible ink onto a first side of the hard-panned, sugar shelled, pellet-shaped confectionery (20);
flipping the hard-panned, sugar shelled, pellet-shaped confectionery (20); and
ink-jet printing edible ink onto a second side of the hard-panned, sugar shelled, pellet-shaped confectionery (20); wherein
the edible ink applied to the first side of the hard-panned, sugar shelled, pellet-shaped confectionery (20) may be the same or different from the edible ink applied to the second side.

3. The method according to claim 2, wherein the first and second sides of the hard-panned, sugar shelled, pellet-shaped confectionery (20) are substantially covered by one or more edible inks.

4. The method according to any one of the preceding claims, wherein the surface of the sugar shelled, pellet-shaped confectionery (20) is a substantially uncolored sugar shelled surface.

5. The method according to any one of the preceding claims, wherein a portion of the surface of the hard-panned, sugar shelled, pellet-shaped confectionery (20) is left uncoated to form an image.

6. The method according to any one of clams 1 to 4, wherein the applied color coat (23) substantially covers the surface of the hard-panned, sugar shelled, pellet-shaped confectionery (20).

7. The method according to any one of the preceding claims, wherein the color coat (23) is a base color coat (23), and the method further comprises ink-jet printing at least one other edible ink onto the base color coat (23).

8. The method according to claim 7, wherein the at least one other edible ink forms an image (12) on the base color coat (23).

9. The method according to any one of the preceding claims, wherein the color coat (23) will cover at least 50% of the surface.

10. The method according to claim 1, wherein the hard-panned, sugar shelled, pellet-shaped confectionery (20) is placed in functional association with the ink-jet head by conveying the hard-panned, sugar shelled, pellet-shaped confectionery (20) in a conveying pocket shaped to hold the hard-panned, sugar shelled, pellet-shaped confectionery (20) to an ink-jet printing station.

11. The method according to claim 10, wherein the step of applying comprises:
ink-jet printing edible ink onto a first side of the hard-panned, sugar shelled, pellet-shaped confectionery (20);
flipping the hard-panned, sugar shelled, pellet-shaped confectionery (20); and ink-jet printing edible ink onto a second side of the hard-panned, sugar shelled, pellet-shaped confectionery (20); and wherein
the edible ink applied to the first side of the sugar shelled, pellet-shaped confectionery (20) may be the same or different from the edible ink applied to the second side.

12. The method according to claim 11, wherein the first and second sides of the hard-panned, sugar shelled, pellet-shaped confectionery (20) are substantially covered by one or more edible inks.

13. The method according to any one of claims 10 to 12, wherein the surface of the sugar shelled, pellet-shaped confectionery (20) is a substantially uncolored sugar shelled surface.

14. The method according to claim 13, wherein a portion of the surface of the hard-panned, sugar shelled, pellet-shaped confectionery (20) is left uncoated to form an image.

15. The method according to any one of claims 10 to 14, wherein the color coat (23) is a base color coat (23), and the method further comprises ink-jet printing at least one other edible ink onto the base color coat (23).

16. The method according to claims 15, wherein the at least one other edible ink forms an image on the base color coat (23).

17. A colored hard-panned, sugar shelled, pellet-shaped confectionery (20), comprising:
a confectionery center (21);
a hard-panned sugar shell, covering the confectionery center (21), and having an outer surface; and
a color coat (23) formed by an ink-jet coating on at least a portion of the sugar shell surface, wherein the color coat (23) covers at least 25% of the surface.

18. The colored hard-panned, sugar shelled, pellet-shaped confectionery (20) according to claim 17, wherein the surface of the hard-panned sugar shell is a substantially uncolored sugar shelled surface.

19. The colored hard-panned, sugar shelled, pellet-shaped confectionery (20) according to claim 17 or 18, wherein the outer surface is completely covered by the ink-jet coating.

20. The colored hard-panned, sugar shelled, pellet-shaped confectionery (20) according to claim 17, obtainable by a method according to claim 1.

21. The colored hard-panned, sugar shelled, pellet-shaped confectionery (20) according to claim 20, having first and second sides, wherein the first side has a color that is different from that of the second side.

22. The colored hard-panned, sugar shelled, pellet-shaped confectionery (20) according to claim 20 or claim 21, wherein the surface of the sugar shelled, pellet-shaped confectionery (20) is a substantially uncolored sugar shelled surface.

## Patentansprüche

1. Verfahren zum Aufbringen eines Farbüberzugs (23) durch Tintenstrahldrucken auf eine hartdragierte, zuckerummantelte, pelletförmige Süßware (20), umfassend:
Platzieren wenigstens einer hartdragierten, zuckerummantelten, pelletförmigen Süßware (20) in funktioneller Verbindung mit einem Tintenstrahlkopf;
Aufbringen wenigstens eines Teils eines Farbüberzugs (23) auf die hartdragierte, zuckerummantelte, pelletförmige Süßware (20) durch Tintenstrahldrucken wenigstens einer essbaren Tinte auf eine Oberfläche der hartdragierten, zuckerummantelten, pelletförmigen Süßware (20); und
Trocknen des Farbüberzugs (23), wobei der Farbüberzug (23) wenigstens 25% der Oberfläche überdecken wird.

2. Verfahren nach Anspruch 1, wobei der Schritt des Aufbringens umfasst:
Tintenstrahldrucken essbarer Tinte auf eine erste Seite der hartdragierten, zuckerummantelten, pelletförmigen Süßware (20);
Herumdrehen der hartdragierten, zuckerummantelten, pelletförmigen Süßware (20); und
Tintenstrahldrucken essbarer Tinte auf eine zweite Seite der hartdragierten, zuckerummantelten, pelletförmigen Süßware (20); wobei
die auf die erste Seite der hartdragierten, zuckerummantelten, pelletförmigen Süßware (20) aufgebrachte essbare Tinte identisch zu oder verschieden von der auf die zweite Seite aufgebrachten essbaren Tinte sein kann.

3. Verfahren nach Anspruch 2, wobei die ersten und zweiten Seiten der hartdragierten, zuckerummantelten, pelletförmigen Süßware (20) von einer oder mehreren essbaren Tinten im wesentlichen überdeckt werden.

4. Verfahren nach einem der vorangehenden Ansprüche, wobei die Oberfläche der zuckerummantelten, pelletförmigen Süßware (20) eine im wesentlichen ungefärbte zuckerummantelte Oberfläche ist.

5. Verfahren nach einem der vorangehenden Ansprüche, wobei ein Teil der Oberfläche der hartdragierten, zuckerummantelten, pelletförmigen Süßware (20) nicht-überzogen bleibt, um ein Bild zu bilden.

6. Verfahren nach einem der Ansprüche 1 bis 4, wobei der aufgebrachte Farbüberzug (23) die Oberfläche der hartdragierten, zuckerummantelten, pelletförmigen Süßware (20) im wesentlichen überdeckt.

7. Verfahren nach einem der vorangehenden Ansprüche, wobei der Farbüberzug (23) ein Basisfarbüberzug (23) ist und das Verfahren weiter das Tintenstrahldrucken wenigstens einer weiteren essbaren Tinte auf den Basisfarbüberzug (23) umfasst.

8. Verfahren nach Anspruch 7, wobei wenigstens eine weitere essbare Tinte ein Bild (12) auf dem Basisfarbüberzug (23) bildet.

9. Verfahren nach einem der vorangehenden Ansprüche, wobei der Farbüberzug (23) wenigstens 50% der Oberfläche überdecken wird.

10. Verfahren nach Anspruch 1, wobei die hartdragierte, zuckerummantelte, pelletförmige Süßware (20) in funktionaler Verbindung mit dem Tintenstrahlkopf platziert wird, indem die hartdragierte, zuckerummantelte, pelletförmige Süßware (20) in einer Fördertasche, die ausgeformt ist, um die hartdragierte, zuckerummantelte, pelletförmige Süßware (20) aufzunehmen, zu einer Tintenstrahldruckstation befördert wird.

11. Verfahren nach Anspruch 10, wobei der Schritt des Aufbringens umfasst:
Tintenstrahldrucken essbarer Tinte auf eine erste Seite der hartdragierten, zuckerummantelten, pelletförmigen Süßware (20);
Herumdrehen der hartdragierten, zuckerummantelten, pelletförmigen Süßware (20); und Tintenstrahldrucken essbarer Tinte auf eine zweite Seite der hartdragierten, zuckerummantelten, pelletförmigen Süßware (20); und wobei
die auf die erste Seite der zuckerummantelten, pelletförmigen Süßware (20) aufgebrachte Tinte identisch zu oder verschieden von der auf die zweite Seite der aufgebrachten essbaren Tinte sein kann.

12. Verfahren nach Anspruch 11, wobei die ersten und zweiten Seiten der hartdragierten, zuckerummantelten, pelletförmigen Süßware (20) von einer oder mehreren essbaren Tinten im wesentlichen überdeckt werden.

13. Verfahren nach einem der Ansprüche 10 bis 12, wobei die Oberfläche der zuckerummantelten, pelletförmigen Süßware (20) eine im wesentlichen ungefärbte zuckerummantelte Oberfläche ist.

14. Verfahren nach Anspruch 13, wobei ein Teil der Oberfläche der hartdragierten, zuckerummantelten, pelletförmigen Süßware (20) nicht-überzogen bleibt, um ein Bild zu bilden.

15. Verfahren nach einem der Ansprüche 10 bis 14, wobei der Farbüberzug (23) ein Basisfarbüberzug (23) ist und das Verfahren weiter das Tintenstrahldrucken wenigstens einer weiteren essbaren Tinte auf den Basisfarbüberzug (23) umfasst.

16. Verfahren nach Anspruch 15, wobei die wenigstens eine weitere essbare Tinte ein Bild auf dem Basisfarbüberzug (23) bildet.

17. Gefärbte hartdragierte, zuckerummantelte, pelletförmige Süßware (20), umfassend:
einen Süßwarenkern (21);
einen hartdragierten Zuckermantel, der den Süßwarenkern (21) überdeckt und eine äußere Oberfläche aufweist; und
einen Farbüberzug (23), ausgebildet durch eine Tintenstrahlbeschichtung auf wenigstens einem Teil der Zuckermanteloberfläche, wobei der Farbüberzug (23) wenigstens 25% der Oberfläche überdeckt.

18. Gefärbte hartdragierte, zuckerummantelte, pelletförmige Süßware (20) nach Anspruch 17, wobei die Oberfläche des hartdragierten Zuckermantels eine im wesentlichen ungefärbte zuckerummantelte Oberfläche ist.

19. Gefärbte hartdragierte, zuckerummantelte, pelletförmige Süßware (20) nach Anspruch 17 oder 18, wobei die äußere Oberfläche vollständig von der Tintenstrahlbeschichtung überdeckt ist.

20. Gefärbte hartdragierte, zuckerummantelte, pelletförmige Süßware (20) nach Anspruch 17, erhältlich mit einem Verfahren nach Anspruch 1.

21. Gefärbte hartdragierte, zuckerummantelte, pelletförmige Süßware (20) nach Anspruch 20, mit ersten und zweiten Seiten, wobei die erste Seite eine Farbe aufweist, die verschieden ist von derjenigen der zweiten Seite.

22. Gefärbte hartdragierte, zuckerummantelte, pelletförmige Süßware (20) nach Anspruch 20 oder Anspruch 21, wobei die Oberfläche der zuckerummantelten, pelletförmigen Süßware (20) eine im wesentlichen ungefärbte zuckerummantelte Oberfläche ist.

## Revendications

1. Procédé d'application d'une couche de couleur (23) par impression à jet d'encre sur une confiserie durcie, enrobée de sucre, en forme de pastille (20), comprenant les étapes consistant à:
placer au moins une confiserie durcie, enrobée de sucre, en forme de pastille (20) en association fonctionnelle avec une tête de jet d'encre;
appliquer au moins une partie d'une couche de couleur (23) sur la confiserie durcie, enrobée de sucre, en forme de pastille (20) par impression à jet d'encre d'au moins une encre comestible sur une surface de la confiserie durcie, enrobée de sucre, en forme de pastille (20), et
sécher la couche de couleur (23), dans lequel la couche de couleur (23) recouvrira au moins 25% de la surface.

2. Procédé selon la revendication 1, dans lequel l'étape d'application comprend:
l'impression par jet d'encre d'une encre comestible sur une première face de la confiserie durcie, enrobée de sucre, en forme de pastille (20);
la rotation de la confiserie durcie, enrobée de sucre, en forme de pastille (20), et
l'impression par jet d'encre d'une encre comestible sur une deuxième face de la confiserie durcie, enrobée de sucre, en forme de pastille (20); dans lequel l'encre comestible appliquée sur la première face de la confiserie durcie, enrobée de sucre, en forme de pastille (20) peut être la même ou différente de l'encre comestible appliquée sur la deuxième face.

3. Procédé selon la revendication 2, dans lequel la première et la deuxième face de la confiserie durcie, enrobée de sucre, en forme de pastille (20) sont substantiellement recouvertes d'une ou de plusieurs encres comestibles.

4. Procédé selon l'une quelconque des revendications précédentes, dans lequel la surface de la confiserie enrobée de sucre, en forme de pastille (20) est une surface enrobée de sucre sensiblement incolore.

5. Procédé selon l'une quelconque des revendications précédentes, dans lequel une partie de la surface de la confiserie durcie, enrobée de sucre, en forme de pastille (20) est laissée non enrobée pour former une image.

6. Procédé selon l'une quelconque des revendications 1 à 4, dans lequel la couche de couleur appliquée (23) recouvre substantiellement la surface de la confiserie durcie, enrobée de sucre, en forme de pastille (20).

7. Procédé selon l'une quelconque des revendications précédentes, dans lequel la couche de couleur (23) est une couche de couleur de base (23), et le procédé comprend en outre l'impression par jet d'encre d'au moins une autre encre comestible sur la couche de couleur de base (23).

8. Procédé selon la revendication 7, dans lequel ladite au moins une autre encre comestible forme une image (12) sur la couche de couleur de base (23).

9. Procédé selon l'une quelconque des revendications précédentes, dans lequel la couche de couleur (23) recouvrira au moins 50% de la surface.

10. Procédé selon la revendication 1, dans lequel la confiserie durcie, enrobée de sucre, en forme de pastille (20) est placée en association fonctionnelle avec la tête de jet d'encre en acheminant la confiserie durcie, enrobée de sucre, en forme de pastille (20) dans une poche transporteuse configurée pour contenir la confiserie durcie, enrobée de sucre, en forme de pastille (20), jusqu'à une station d'impression par jet d'encre.

11. Procédé selon la revendication 10, dans lequel l'étape d'application comprend:
l'impression par jet d'encre d'une encre comestible sur une première face de la confiserie durcie, enrobée de sucre, en forme de pastille (20);
la rotation de la confiserie durcie, enrobée de sucre, en forme de pastille (20); et l'impression par jet d'encre d'une encre comestible sur une deuxième face de la confiserie durcie, enrobée de sucre, en forme de pastille (20); et dans lequel
l'encre comestible appliquée sur la première face de la confiserie enrobée, en forme de pastille (20) peut être la même ou différente de l'encre comestible appliquée sur la deuxième face.

12. Procédé selon la revendication 11, dans lequel la première et la deuxième face de la confiserie durcie, enrobée de sucre, en forme de pastille (20) sont substantiellement recouvertes d'une ou de plusieurs encres comestibles.

13. Procédé selon l'une quelconque des revendications 10 à 12, dans lequel la surface de la confiserie enrobée de sucre, en forme de pastille (20) est une surface enrobée de sucre sensiblement incolore.

14. Procédé selon la revendication 13, dans lequel une partie de la surface de la confiserie durcie, enrobée de sucre, en forme de pastille (20) est laissée non enrobée pour former une image.

15. Procédé selon l'une quelconque des revendications 10 à 14, dans lequel la couche de couleur (23) est une couche de couleur de base (23), et le procédé comprend en outre l'impression par jet d'encre d'au moins une autre encre comestible sur la couche de couleur de base (23).

16. Procédé selon la revendication 15, dans lequel ladite au moins une autre encre comestible forme une image sur la couche de couleur de base (23).

17. Confiserie durcie, enrobée de sucre, en forme de pastille colorée (20) comprenant:
un noyau de confiserie (21);
un enrobage de sucre durci, recouvrant le noyau de confiserie (21), et ayant une surface externe; et
une couche de couleur (23) formée par dépôt de la couche par jet d'encre sur au moins une partie de la surface de l'enrobage de sucre, dans laquelle la couche de couleur (23) recouvre au moins 25% de la surface.

18. Confiserie durcie, enrobée de sucre, en forme de pastille colorée (20) selon la revendication 17, dans laquelle la surface de l'enrobage de sucre durci est une surface enrobée de sucre sensiblement incolore.

19. Confiserie durcie, enrobée de sucre, en forme de pastille colorée (20) selon la revendication 17 ou 18, dans laquelle la surface externe est complètement recouverte du revêtement par jet d'encre.

20. Confiserie durcie, enrobée de sucre, en forme de pastille colorée (20) selon la revendication 17, pouvant être obtenue par un procédé selon la revendication 1.

21. Confiserie durcie, enrobée de sucre, en forme de pastille colorée (20) selon la revendication 20, ayant une première et une deuxième face, dans laquelle la première face a une couleur qui est différente de celle de la deuxième face.

22. Confiserie durcie, enrobée de sucre, en forme de pastille colorée (20) selon la revendication 20 ou la revendication 21, dans laquelle la surface de la confiserie enrobée de sucre, en forme de pastille (20) est une surface enrobée de sucre sensiblement incolore.
